# EUROPÄISCHE PATENTANMELDUNG

(11) **EP 1 935 536 A1**
(43) Veröffentlichungstag der Anmeldung: **25.06.2008**
(21) Anmeldenummer: 06026633.5
(22) Anmeldetag: 21.12.2006
(51) Int. Cl.: B22F 3/00, F16D 69/04

(54) **Verfahren zur Herstellung eines Reibrings**

(71) Anmelder: Hoerbiger Antriebstechnik GmbH, 86956 Schongau (DE)
(72) Erfinder: Fuerguth, Werner, 87640 Biessenhofen/Altdorf (DE); Prinke, Stefan, 86971 Peiting (DE); Metzdorf, Günther, 86956 Schongau (DE)
(74) Vertreter: Schmitz, Hans-Werner

(57) **Zusammenfassung**

Die Erfindung betrifft ein Verfahren zur Herstellung eines Reibrings (1) mit den Verfahrensschritten: Aufbringen von Streusinterpulver (2) auf ein nicht besinterbares Trägermaterial (Edelstahlträger wurde mit Erfolg getestet) (3), Backen des auf den Edelstahlträger (3) aufgebrachten Streusinterpulvers (2), Abnehmen der durch das Backen entstandenen Streusinterbelagfläche (4) vom Edelstahlträger (3), Ausstanzen von Belagfolienstreifen (5, 6) aus der Belagfolie (4) bei gleichzeitigem Stanzen scharfkantiger Nuten (7, 8) in die Belagfolienstreifen (5, 6) und Fixieren der gestanzten Belagfolienstreifen (5, 6) auf einem metallischen Basiskörper (9) des Reibrings (1).

## Beschreibung

Die Erfindung betrifft ein Verfahren zur Herstellung eines Reibrings gemäß dem Oberbegriff des Anspruchs 1. Ein solches Verfahren ist aus EP 0 792 715 B1 und EP 2006/004343 bekannt.

Hierbei werden zur Steigerung des Ölvorratvolumens und der Schalteigenschaften im kalten Zustand axiale Rillen in die Reibbelagfläche des Reibrings in einem separaten Arbeitsschritt durch Prägen eingebracht. Die dabei ausgeführte Nutform weist den Nachteil auf, dass sie herstellungsbedingt in den Eckbereichen immer einen Radius des Prägewerkzeugs aufweist, was die Menge des Ölvorratsvolumens sowie die tribologischen Eigenschaften bzw. den Reibwert des Reibrings beschränkt.

Es ist daher Aufgabe der vorliegenden Erfindung, ein Verfahren zur Herstellung eines Reibrings gemäß dem Oberbegriff des Anspruchs 1 zu schaffen, das die tribologischen Eigenschaften des Reibrings, insbesondere seinen Reibwert bzw. seine Reibcharakteristik, sowie dessen Schmierung bzw. Ölvorratsvolumen verbessert und eine kostengünstigere Herstellung ermöglicht.

Die Lösung dieser Aufgabe erfolgt durch die Merkmale des Anspruchs 1.

So ist es durch die erfindungsgemäße Ausbildung der Streusinter-Belagfolie des Reibrings möglich, einen erhöhten Reibwert und eine verbesserte Reibungscharakteristik zu erzielen und dadurch Systemausfälle wegen Unterschreitung des Grenzreibwerts zu vermeiden. Ferner kann eine wirtschaftlichere Fertigung zur Herstellung der Rillierung/Nuten in der Belagfolie realisiert werden.

Die Unteransprüche haben vorteilhafte Weiterbildungen der Erfindung zum Inhalt.

Weitere Einzelheiten, Vorteile und Merkmale der Erfindung ergeben sich aus nachfolgender Beschreibung von Ausführungsbeispielen und der Zeichnung.

Es zeigt:
- Fig. 1: eine schematische Schnittdarstellung eines Edelstahlträgers mit aufgestreutem Streusinterpulver,
- Fig. 2: eine schematische Schnittdarstellung eines Edelstahlträgers mit abgehobener Streusinter-Belagfolie,
- Fig. 3: eine schematische perspektivische Ansicht einer Streusinter-Belagfolie mit auszuschneidenden Belagfolienstreifen,
- Fig. 4: eine Schnittdarstellung eines Belagfolienstreifens mit ausgestanzten Nuten, und
- Fig. 5: eine Schnittdarstellung eines Reibrings mit aufgebrachtem Belagfolienstreifen.

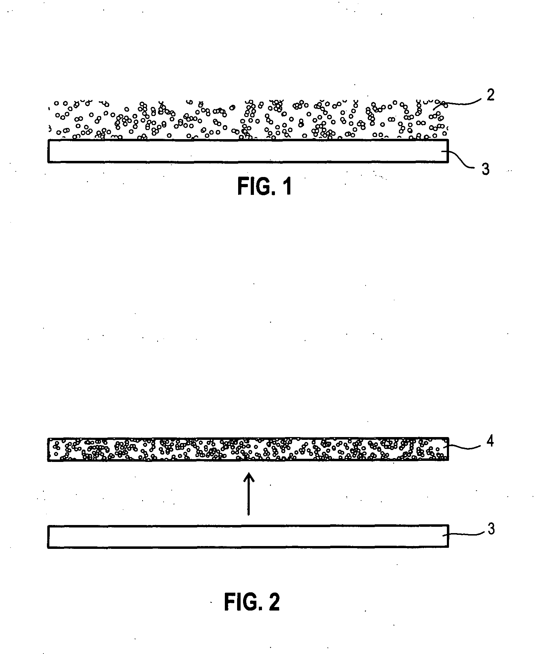

In Fig. 1 ist ein Querschnitt eines Edelstahlträgers 3 dargestellt, auf dessen Oberfläche Streusinterpulver 2 aufgestreut ist. Der Edelstahlträger 3 wird mit diesem aufgebrachten Streusinterpulver 2 einer thermischen Wärmebehandlung unterzogen bzw. gebacken, so dass sich das Streusinterpulver 2 zu einer Streusinter-Belagfolie 4 verfestigt, die, wie in der Schnittdarstellung von Fig. 2 schematisch gezeigt, vom Edelstahlträger 3 abgenommen werden kann.

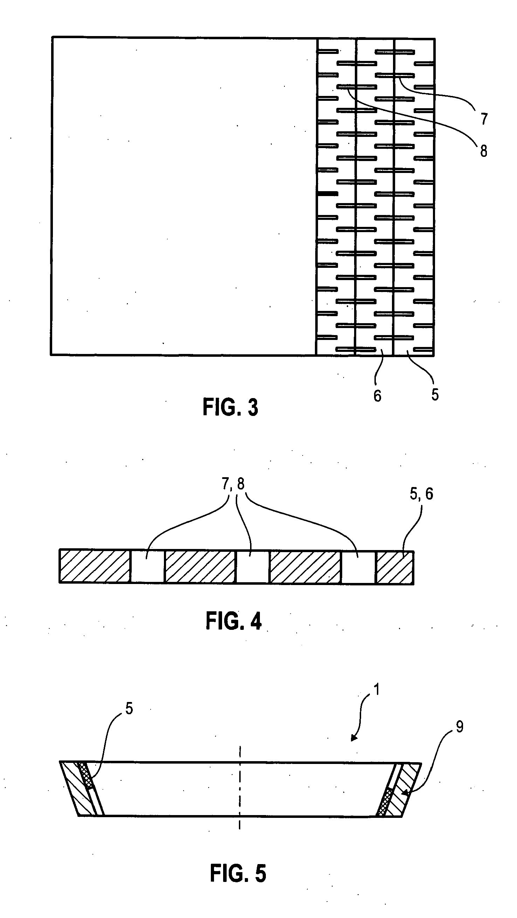

Fig. 3 zeigt die Streusinter-Belagfolie 4 in perspektivischer Darstellung, aus der nun für den Reibring 1 benötigte einzelne Belagfolienstreifen 5, 6 ausgestanzt werden.

Wie in Fig. 3 dargestellt, werden bei diesem Stanzvorgang gleichzeitig scharfkantige Nuten 7, 8 in diesen Belagfolienstreifen 5, 6 eingestanzt.

Für diesen Produktionsschritt, insbesondere der Nutenherstellung, können darüber hinaus aber auch alle erdenklichen mechanischen und thermischen Schneid- bzw. Trennverfahren angewendet werden.

Alternativ dazu ist es bei zu besinternden Planteilen auch möglich, die axialen und/oder radialen Nuten 5, 6 durch Maskieren/Abdecken des Planteils während des Bestreuvorgangs herzustellen.

Ferner ist eine spanabhebende Formgebung der Nutgeometrie nach dem Sinterprozess im planaren oder konischen Zustand der gebackenen Streusinter-Belagfläche 4 ebenfalls denkbar.

In Fig. 4 ist ein Querschnitt des Belagfolienstreifens 5, 6 mit den darin ausgebildeten scharfkantigen Nuten 7, 8 dargestellt. Die scharfkantige Ausbildung dieser Nuten 7, 8 durch den Stanzprozess ist den geprägten Nuten bzw. Rillen bei Reibbelägen des Standes der Technik dadurch überlegen, dass die scharfkantige Form keinerlei Radien aufweist und sich somit ein optimierter Schmierkeil mit einem größeren Ölvorratsvolumen darin ausbilden kann.

Der auf diese Weise hergestellte genutete Belagfolienstreifen 5, 6 des Reibbelags des Reibrings 1 wird nun in den metallischen Basiskörper 9 gefügt und stoffschlüssig mit diesem zu einer Einheit verbunden.

Bei einer weiteren Ausführungsform der Erfindung kann ein solcher Belagfolienstreifen 5, 6 auch aus mehreren einzelnen Segmenten zusammengesetzt sein.

In Fig. 5 ist ein Reibring 1 im Schnitt dargestellt, der aus dem metallischen Basiskörper 9 und dem auf dessen kegelstumpfförmiger innerer Umfangsfläche stoffschlüssig aufgebrachten Belagfolienstreifen 5 bzw. 6 aufgebaut ist. In den Belagfolienstreifen 5, 6 können die Nuten als axiale und/oder radiale Nuten 7, 8 ausgebildet sein, von denen in dieser Schnittzeichnung nur die dem Schnitt entsprechenden Nuten dargestellt sind.

Vergleichende Erprobungen bzw. Prüfstandtests haben ergeben, dass sich die so hergestellte Streusinter-Belagfläche 4 des Reibrings 1 durch einen erhöhten Reibwert und eine verbesserte Reibcharakteristik auszeichnet. In Abhängigkeit vom eingesetzten Getriebeöl konnten auf diese Weise Systemausfälle des Synchronsystems mit dem eingesetzten erfindungsgemäßen Reibring 1 infolge einer Unterschreitung des Grenzreibwertes vermieden werden. Darüber hinaus ergibt sich durch die Einsparung eines Prozessschritts bei der Herstellung der Rillierung bzw. Nutgeometrie der Streusinter-Belagfläche 4 eine damit verbundene erhöhte Wirtschaftlichkeit.

Zur Ergänzung der Offenbarung wird explizit auf die zeichnerische Darstellung der Erfindung in den Figuren verwiesen.

### Bezugszeichenliste

- 1: Reibring
- 2: Streusinterpulver
- 3: Edelstahlträger
- 4: Streusinter-Belagfläche
- 5,6: Belagfolienstreifen
- 7,8: Nuten
- 9: metallischer Basiskörper

## Patentansprüche

1. Verfahren zur Herstellung eines Reibrings (1) mit folgenden Verfahrensschritten:
- Aufbringen von Streusinterpulver (2) auf ein nicht besinterbares Material (Edelstahlträger) (3),
- Backen des auf den Edelstahlträger (3) aufgebrachten Streusinterpulvers (2),
- Abnehmen der durch das Backen entstandenen Streusinter-Belagfolie (4) vom Edelstahlträger (3),
- Ausstanzen von Belagfolienstreifen (5, 6) aus der Streusinter-Belagfolie (4) bei gleichzeitigem Stanzen scharfkantiger Nuten (7, 8) in die Belagfolienstreifen (5, 6), und
- Fixieren der gestanzten Belagfolienstreifen (5, 6) auf einem metallischen Basiskörper (9) des Reibrings (1).

2. Verfahren nach Anspruch 1, **dadurch gekennzeichnet, dass** die Belagfolienstreifen (5, 6) mit axialen Nuten (7, 8) versehen sind.

3. Verfahren nach Anspruch 1, **dadurch gekennzeichnet, dass** die Belagfolienstreifen (5, 6) mit axialen und/oder radialen Nuten (7, 8) versehen sind.

4. Verfahren nach einem der Ansprüche 1 bis 3, **dadurch gekennzeichnet, dass** die Belagfolienstreifen (5, 6) aus mehreren Segmenten zusammengesetzt sind.

5. Verfahren nach Anspruch 1, **dadurch gekennzeichnet, dass** die Nutform in der Streusinter-Belagfolie (4) durch Abdeckung/Maskierung während der Bestreuung mit Sinterpulver hergestellt wird.

6. Verfahren nach Anspruch 1, **dadurch gekennzeichnet, dass** die Nutform in die Streusinter-Belagfolie (4) im planaren oder konischen Zustand spanabhebend eingebracht wird.
